# FASCICULE DE BREVET EUROPEEN

(11) **EP 1 057 315 B1**
(45) Date de publication et mention de la délivrance du brevet: **18.05.2005**
(21) Numéro de dépôt: 99902597.6
(22) Date de dépôt: 04.02.1999
(51) Int. Cl.: H04M 3/50

(54) **SYSTEME DE CONSULTATION D'UN SERVEUR DE COURRIER ELECTRONIQUE**
SYSTEM ZUR BEFRAGUNG EINES ELEKTRONISCHEN POSTSERVERS
SYSTEM FOR CONSULTING AN ELECTRONIC MAIL SERVER

(30) Priorité: 23.02.1998 FR 9802148
(43) Date de publication de la demande: 06.12.2000
(73) Titulaire: Schlumberger Payphones S.A.S, 92120 Montrouge (FR)
(72) Inventeur: PARRICHE, Olivier, F-75015 Paris (FR)
(74) Mandataire: Weihs, Bruno
(86) Numéro de dépôt international: PCT/FR1999/000247
(87) Numéro de publication internationale: WO 1999/043140

(56) Documents cités:
- EP-A- 0 778 690
- EP-A- 0 794 650
- DE-A- 4 406 602

## Description

La présente invention concerne un système de consultation d'un serveur de courrier électronique, dans lequel sont enregistrés, sous des données d'identification d'un utilisateur, une pluralité de messages électroniques destinés audit utilisateur.

L'invention trouve une application particulièrement avantageuse dans le domaine de la téléphonie publique.

On connaît des systèmes de consultation de serveurs de courrier électronique mettant en oeuvre un ordinateur personnel équipé d'un logiciel de gestion de messages électroniques et relié à un serveur de courrier électronique. Ces systèmes connus permettent une consultation visuelle des messages sur l'écran de l'ordinateur personnel, moyennant la saisie par l'utilisateur de données d'identification, telles qu'une adresse de courrier électronique et un mot de passe. Au besoin, une imprimante connectée à l'ordinateur peut fournir une copie-papier des messages reçus.

Ce type de systèmes de consultation présente cependant l'inconvénient d'être à poste fixe et d'exiger un matériel encombrant, la proximité d'une prise d'alimentation électrique et une ligne téléphonique à raccorder au modem de l'ordinateur. Il n'est donc pas possible pour un utilisateur de consulter sa messagerie électronique de n'importe quel endroit, il lui faut impérativement se trouver sur le lieu où est installé son ordinateur personnel.

Pour remédier à cet inconvénient, il a été proposé des systèmes de consultation fonctionnant à partir d'un appareil téléphonique, téléphone mobile notamment, qui permettent à un utilisateur abonné à un serveur de courrier électronique d'accéder à sa messagerie en composant le numéro du serveur, puis ses données d'identification. Après avoir reconnu l'utilisateur au moyen desdites données d'identification, le serveur lui communique verbalement, par synthèse vocale, le nombre, le titre et, sur demande, le contenu des derniers messages reçus à destination de cet utilisateur. Ces systèmes de consultation vocale ont l'avantage, pour les porteurs de téléphone mobile par exemple, d'offrir un accès à la messagerie électronique à partir de n'importe quel endroit où la connexion téléphonique au serveur est possible, sans avoir besoin d'un ordinateur personnel ou d'une prise électrique. Bien entendu, avec ces systèmes, on ne peut avoir accès aux messages directement sur écran. Toutefois, le coût de ce service est inférieur aux solutions précitées affichant le contenu des messages.

Ces systèmes connus de consultation de courrier électronique présentent cependant plusieurs inconvénients.

D'abord au niveau de la sécurité, un mot de passe, par exemple, saisi directement sur un clavier présente le risque d'être vu par des regards indiscrets. De plus, la ligne du réseau de téléphone connecté peut faire l'objet de piratages visant à intercepter les messages qui y sont transmis.

D'autre part, sur le plan de l'ergonomie, on peut remarquer qu'avec ces systèmes, mémoriser les numéros de messages à consulter devient vite fastidieux dès que leur nombre devient important.

Aussi, le problème technique à résoudre par l'objet de la présente invention est de proposer un système de consultation d'un serveur de courrier électronique dans lequel sont enregistrés, sous des données d'identification d'un utilisateur, une pluralité de messages électroniques destinés audit utilisateur, système qui offrirait une sécurité et une ergonomie améliorées par rapport aux systèmes de consultation vocale connus, tout en conservant le caractère bon marché de ce service.

La solution au problème technique posé consiste, selon la présente invention, en ce que ledit système comprend :
- une carte à mémoire électronique pour stocker lesdites données d'identification,
- un appareil téléphonique comprenant un combiné, un lecteur de cartes à mémoire électronique, un écran de visualisation et des touches d'accès à des options visualisées sur ledit écran,
ledit appareil téléphonique étant apte, d'une part, à transmettre audit serveur les données d'identification lues par le lecteur de cartes à mémoire électronique, et d'autre part, à afficher une liste de messages électronique reçus en retour du serveur, présentés à titre d'options sur l'écran de visualisation, l'utilisateur sélectionnant un message en manoeuvrant la touche d'accès correspondante.

Ainsi, avec le système de l'invention, il est possible d'afficher en permanence la liste des messages sur l'écran de visualisation, de sélectionner l'un d'entre eux au moyen de la touche d'accès, de prendre connaissance de son contenu, puis d'en sélectionner un autre, et ainsi de suite. On notera que le système de consultation selon l'invention peut être généralisé à grande échelle grâce à son implantation sur les réseaux de téléphonie publique, ce qui contribue à la démocratisation du courrier électronique, et également d'Internet, conformément au souhait des gouvernements européens. Cette facilité d'accès est rendue d'autant plus grande que, comme cela a été mentionné plus haut, le coût d'une telle solution reste sensiblement inférieur à celui des systèmes classiques de consultation visuelle des messages, mettant en oeuvre des moyens lourds tels que ordinateur personnel, modern, etc...

D'une manière générale, l'invention prévoit que l'appareil téléphonique est apte à afficher sur l'écran de visualisation le message sélectionné par l'utilisateur, ceci pour une simple lecture du message apparaissant sous forme écrite sur l'écran. Cependant, l'utilisateur a également la possibilité de choisir une consultation orale dudit message. A cet effet, l'appareil téléphonique est apte à transmettre le message sélectionné sous forme vocale par décroché du combiné. Au moment où l'utilisateur décroche le combiné de l'appareil téléphonique, un dispositif de synthèse vocale est mis en marche fournissant une version orale du message à travers la ligne téléphonique.

Selon un mode de réalisation particulier du système, objet de l'invention, l'appareil téléphonique comprend également des moyens d'actions par l'utilisateur sur le message sélectionné. Par exemple, lesdits moyens d'actions sont des moyens de réponse et/ou de transmission permettant à l'utilisateur de répondre au message préalablement sélectionné, ou à le retransmettre à au moins un autre destinataire.

Un avantage du système conforme à l'invention réside dans l'utilisation d'une carte à mémoire électronique, particulièrement bien adaptée au stockage des données d'identification de l'utilisateur. En particulier, sur le plan de la sécurité, le mot de passe peut être mémorisé dans la carte, ce qui permet à l'utilisateur d'éviter de le saisir en présence de tiers. D'autre part, avec une carte à mémoire électronique, il est possible de sécuriser la ligne téléphonique par cryptage des messages, et ainsi d'éliminer d'éventuels piratages.

De plus, on peut prévoir que ladite carte à mémoire électronique comporte également des unités téléphoniques prépayées, offrant ainsi un moyen très simple de facturation et de règlement du prix de la consultation du serveur.

Enfin, de manière à informer l'utilisateur sur la longueur des messages, et donc sur le coût de leur consultation, il est préférable, selon l'invention, que ladite liste de messages électroniques est accompagnée du nombre de mots et/ou de la durée de chaque message.

La description qui va suivre en regard des dessins annexés, donnés à titre d'exemples non limitatifs, fera bien comprendre en quoi consiste l'invention et comment elle peut être réalisée.

La figure 1 est une vue de face d'un appareil téléphonique d'un système de consultation vocale, conforme à l'invention.

Les figures 2a à 2e sont des vues de face de l'écran de visualisation de l'appareil téléphonique de la figure 1 à cinq stades successifs de la consultation.

La figure 3 est un schéma de liaison de l'appareil téléphonique de la figure 1 à une serveur de courrier électronique.

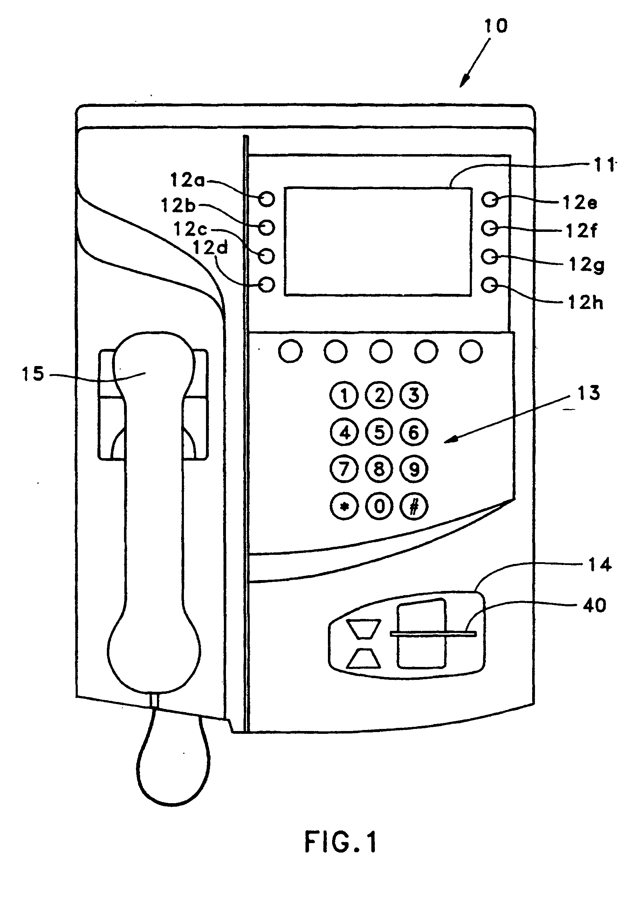

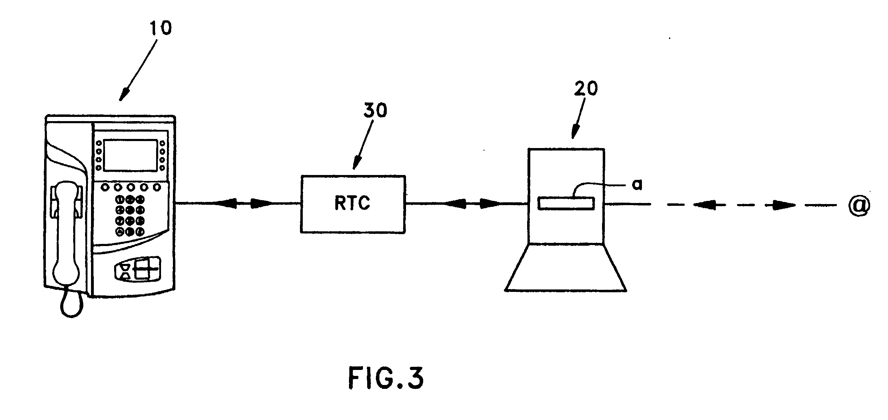

Sur la figure 1 est représenté un appareil téléphonique 10, téléphone public par exemple, faisant partie d'un système de consultation d'un serveur 20 de courrier électronique qui, comme le montre la figure 3, est relié à l'appareil 10 au travers du réseau 30 de téléphone commuté (RTC). Chaque utilisateur abonné au serveur 20 possède une adresse a sous laquelle sont enregistrés les messages électroniques qui lui sont destinés, provenant d'autre serveurs via le réseau Internet. L'adresse a constitue une donnée d'identification de l'utilisateur.

Se référant à la figure 1, on peut voir que l'appareil téléphonique 10 comprend un écran 11 de visualisation ainsi que des touches 12a,..., 12h, d'accès à des options visualisées sur ledit écran 11. En outre, l'appareil 10 comprend un clavier 13, un lecteur 14 de cartes à mémoire électronique et un combiné 15. De manière usuelle, le lecteur 14 est destiné à échanger des informations avec des cartes téléphoniques prépayées, délivrées par l'opérateur de télécommunications gérant le réseau téléphonique, ici le réseau RTC. Au fur et à mesure du déroulement d'une communication, les unités téléphoniques présentes dans la carte sont successivement consommées en fonction de la tarification applicable.

Dans le cadre du système de consultation d'un serveur de courrier électronique, objet de l'invention, le lecteur 14 est également destiné à communiquer avec des cartes à mémoire électronique d'abonnement audit serveur 20. A cet effet, chaque abonné dispose d'une carte 40 dans laquelle sont stockées notamment les données d'identification de l'utilisateur, à savoir son adresse a de courrier électronique et éventuellement un mot de passe.

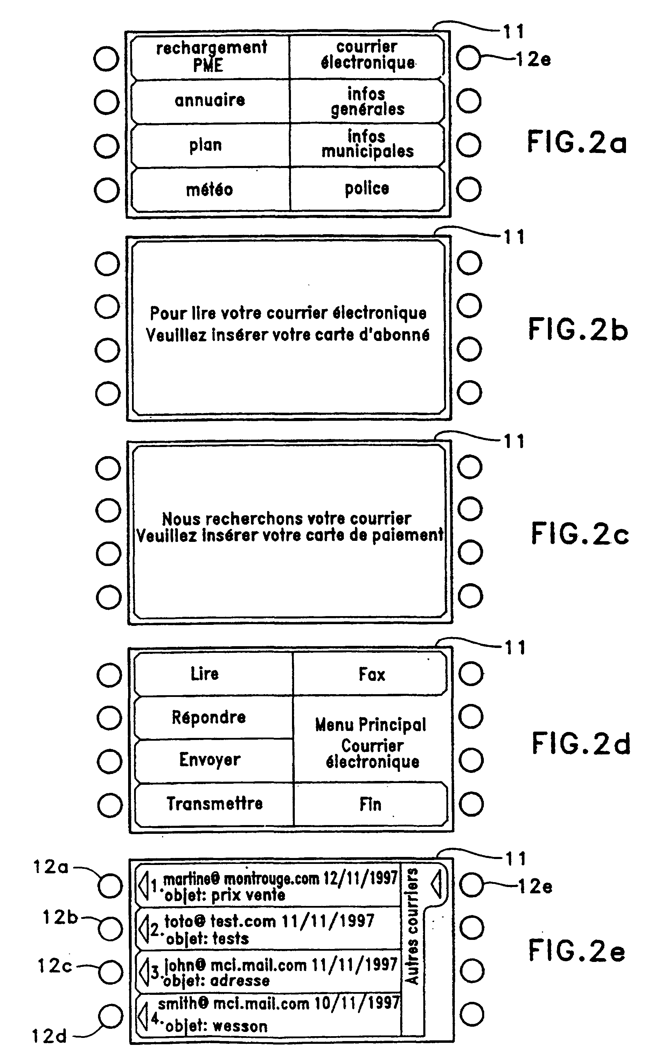

Lorsqu'un abonné désire consulter sa boîte à lettres électronique à l'adresse a du serveur 20, il choisit tout d'abord sur la page d'accueil affichée à l'écran 11 de visualisation de l'appareil téléphonique 10 l'option "courrier électronique" au moyen de la touche 12e d'accès, comme le montre la figure 2a. Apparaît alors sur l'écran 11 un message invitant l'utilisateur à introduire dans le lecteur 14 sa carte 40 d'abonné (Figure 2b). Après insertion de la carte 40 dans le lecteur 14, l'appareil téléphonique 10 transmet au serveur 20, via le réseau téléphonique 30, les données d'identification, notamment l'adresse a, lues par le lecteur 14 de manière à ce que le serveur 20 puisse rechercher le courrier de l'abonné. Pendant ce temps, un message d'attente est affiché sur l'écran 11 de visualisation, proposant éventuellement à l'utilisateur d'insérer une carte de paiement telle qu'un porte-monnaie électronique ou une carte bancaire par exemple (Figure 2c). Après recherche et introduction de la carte de paiement, le service de consultation de la messagerie électronique est disponible, le serveur 20 ayant transmis à son tour à l'appareil téléphonique 10 une liste des messages électroniques trouvés à l'adresse a de abonné. L'écran 11 de visualisation apparaît alors sous la forme d'un menu, offrant à l'utilisateur divers choix possibles (Figure 2d). En particulier, il peut en appuyant sur la touche 12a accéder à l'option "Lire" du menu, afin de prendre connaissance des messages électroniques présents à son adresse. Sur la figure 2e, on peut voir que cette liste de messages est affichée sur l'écran 11 de visualisation comme des options accessibles au moyen des touches 12a, ..., 12h. Dans l'exemple représenté, les quatre premiers messages apparaissent à l'écran sous forme de données résumées, telles que le nom de l'expéditeur, la date et l'objet du message. Si le nombre de messages est supérieur à quatre, on peut obtenir la suite de la liste en appuyant sur la touche 12e. Pour sélectionner un message donné, celui portant le numéro 3 par exemple, l'utilisateur doit manoeuvrer la touche d'accès correspondante, ici la touche 12c. A ce moment le texte du message s'inscrit sur la totalité de l'écran 11 de visualisation, l'utilisateur ayant la faculté de le faire défiler vers le bas et vers le haut, toujours au moyen de touches d'accès, lesquelles lui permettent également de revenir au menu de la figure 2d. Si, lorsque le message est affiché sur l'écran 11, l'abonné décroche le combiné 15, le texte disparaît de l'écran et un dispositif de synthèse vocale, situé dans le serveur 20, restitue à l'utilisateur le contenu du message sous forme orale à travers le réseau téléphonique 30. Après avoir lu ou écouté le message sélectionné, l'utilisateur peut en choisir un autre en appuyant sur une autre touche d'accès, jusqu'à épuisement des messages.

Eventuellement, la liste des messages électroniques affichés est accompagnée du nombre de mots et/ou de la durée de chaque message, ceci dans le but de donner à l'abonné, avant sélection, une information sur la longueur des messages.

Dans l'exemple de réalisation montré sur les figures 2a à 2e, la facturation du service se fait au moyen d'une carte de paiement distincte de la carte 40 d'abonné. Toutefois, il est bien entendu que ladite carte d'abonné pourrait comporter des unités de valeur financières prépayées qui, d'une manière analogue aux cartes téléphoniques, sont consommées en règlement du prix de la consultation du serveur. Un autre procédé de paiement consisterait à relever les données d'identification de l'utilisateur sur sa carte d'abonné et à établir la facturation par l'intermédiaire de l'opérateur téléphonique.

Enfin, on peut prévoir que l'appareil téléphonique 10 comporte également des moyens d'actions par l'utilisateur sur le message sélectionné. Ces actions sont résumées sur le menu de la figure 2d. Une première action possible consiste, de manière non limitative, à répondre oralement à l'expéditeur dudit message. Dans ce cas, l'utilisateur manoeuvre la touche 12b d'accès correspondant à la réponse au message sélectionné, décroche le combiné 15, si cela n'a pas déjà été fait, et lit son message après un bip sonore. Un fichier électronique audio est constitué et envoyé à l'expéditeur du message initial.

L'action "Envoyer" consiste à envoyer un même message enregistré oralement sous forme de fichier électronique à des destinataires choisis par l'utilisateur dans une liste proposée sur l'écran 11 de visualisation.

L'action "Transmettre" a pour but de retransmettre le dernier message lu à des destinataires choisis comme pour l'action "Envoyer".

L'action "Fax" s'applique aussi au dernier message lu, lequel peut être redirigé vers un numéro de télécopieur sélectionné par l'utilisateur, ceci de façon à conserver une trace-papier du message si aucune imprimante n'est disponible sur l'appareil téléphonique 10.

## Revendications

1. Système de consultation d'un serveur (20) de courrier électronique dans lequel sont enregistrés, sous des données (a) d'identification d'un utilisateur, une pluralité de messages électroniques destinés audit utilisateur, **caractérisé en ce que** ledit système comprend :
- une carte (40) à mémoire électronique pour stocker lesdites données (a) d'identification,
- un appareil téléphonique (10) comprenant un combiné (15), un lecteur (14) de cartes à mémoire électronique, un écran (11) de visualisation et des touches (12a, ..., 12h) d'accès à des options visualisées sur ledit écran (11),
ledit appareil téléphonique (10) étant apte, d'une part, à transmettre audit serveur (20) les données (a) d'identification lues par le lecteur (14) de cartes à mémoire électronique, et d'autre part, à afficher une liste de messages électroniques reçus en retour du serveur (20), présentés à titre d'options sur l'écran (11) de visualisation, permettant à l'utilisateur de sélectionner un message en manoeuvrant la touche (12a, ..., 12h) d'accès correspondante.

2. Système selon la revendication 1, **caractérisé en ce que** l'appareil téléphonique (10) est apte à afficher sur l'écran (11) de visualisation le message sélectionné par l'utilisateur.

3. Système selon l'une des revendications 1 ou 2, caractérisé en que l'appareil téléphonique (10) est apte à transmettre le message sélectionné sous forme vocale par décroché du combiné (15).

4. Système selon l'une quelconque des revendications 1 à 3, caractérisé en que ladite liste de messages électroniques est accompagnée du nombre de mots et/ou de la durée de chaque message.

5. Système selon l'une quelconque des revendications 1 à 4, **caractérisé en ce que** ladite carte (40) à mémoire électronique comporte également des unités téléphoniques prépayées.

6. Système selon l'une quelconque des revendications 1 à 5, **caractérisé en ce que** lesdites données d'identification de l'utilisateur comprennent une adresse (a) de courrier électronique.

7. Système selon la revendication 6, **caractérisé en ce que** les données d'identification comprennent également un mot de passe.

8. Système selon l'une quelconque des revendications 1 à 7, **caractérisé en ce que** l'appareil téléphonique (10) comprend également des moyens d'actions par l'utilisateur sur le message sélectionné.

9. Système selon la revendication 8, **caractérisé en ce que** lesdits moyens d'actions sont des moyens de réponse et/ou de transmission dudit message.

10. Système selon l'une quelconque des revendications 1 à 9, **caractérisé en ce que** l'appareil téléphonique (10) est apte à envoyer un message composé oralement par l'utilisateur.

## Patentansprüche

1. System zur Abfrage eines Email-Servers (20), in dem unter den Identifizierungsdaten (a) eines Benutzers eine Vielzahl von elektronischen Nachrichten aufgezeichnet sind, die für den Benutzer bestimmt sind, **dadurch gekennzeichnet, dass** das System Folgendes umfasst:
- eine elektronische Speicherkarte (40) zum Speichern der Identifizierungsdaten (a),
- einen Telefonapparat (10) mit einem Hörer (15), einem Lesegerät (14) für elektronische Speicherkarten, einem Darstellungsbildschirm (11) und Tasten (12a, ..., 12h) für den Zugriff auf auf dem Bildschirm (11) angezeigten Optionen,
wobei der Telefonapparat (10) in der Lage ist, einerseits die durch das Lesegerät (14) von elektronischen Speicherkarten gelesenen Identifizierungsdaten (a) zum Server (20) zu übertragen, und andererseits eine Liste von umgekehrt vom Server (20) empfangenen Nachrichten anzuzeigen, die als Option auf dem Darstellungsbildschirm (11) angezeigt werden, wodurch es dem Benutzer ermöglicht wird, eine Nachricht auszuwählen, indem die entsprechende Zugriffstaste (12a, ..., 12h) betätigt wird.

2. System nach Anspruch 1, **dadurch gekennzeichnet, dass** der Telefonapparat (10) in der Lage ist, auf dem Darstellungsbildschirm (11) die durch den Benutzer ausgewählte Nachricht anzuzeigen.

3. System nach einem der Ansprüche 1 oder 2, **dadurch gekennzeichnet, dass** der Telefonapparat (10) in der Lage ist, die ausgewählte Nachricht in akustischer Form durch Abheben des Hörers (15) zu übertragen.

4. System nach einem der Ansprüche 1 bis 3, **dadurch gekennzeichnet, dass** die Liste elektronischer Nachrichten von der Anzahl der Worte und/oder der Dauer jeder Nachricht begleitet wird.

5. System nach einem der Ansprüche 1 bis 4, **dadurch gekennzeichnet, dass** die elektronische Speicherkarte (40) ebenso vorausbezahlte Telefoneinheiten beinhaltet.

6. System nach einem der Ansprüche 1 bis 5, **dadurch gekennzeichnet, dass** die Identifizierungsdaten des Benutzers eine Email-Adresse (a) umfassen.

7. System nach Anspruch 6, **dadurch gekennzeichnet, dass** die Identifizierungsdaten ebenso ein Passwort umfassen.

8. System nach einem der Ansprüche 1 bis 7, **dadurch gekennzeichnet, dass** der Telefonapparat (10) ebenso Mittel zum Einwirken des Benutzers auf die ausgewählte Nachricht umfasst.

9. System nach Anspruch 8, **dadurch gekennzeichnet, dass** die Einwirkungsmittel Mittel zur Beantwortung und/oder Übertragung der Nachricht sind.

10. System nach einem der Ansprüche 1 bis 9, **dadurch gekennzeichnet, dass** der Telefonapparat (10) in der Lage ist, eine durch den Benutzer oral zusammengesetzte Nachricht zu senden.

## Claims

1. System for consulting an electronic mail server (20) in which are recorded, under data (a) identifying a user, a plurality of electronic messages intended for the said user, **characterized in that** the said system comprises:
- an electronic memory card (40) for storing the said identifying data (a),
- a telephone apparatus (10) comprising a handset (15), an electronic memory card reader (14), a display screen (11) and access keys (12a, ..., 12h) for accessing options displayed on the said screen (11),
the said telephone apparatus (10) being able, on the one hand, to transmit to the said server (20) the identifying data (8) read by the electronic memory card reader (14), and on the other hand, to display a list of electronic messages received in return from the server (20), presented by way of options on the display screen (11), allowing the user to select a message by operating the corresponding access key (12a, ..., 12h).

2. System according to Claim 1, **characterized in that** the telephone apparatus (10) is able to display on the display screen (11) the message selected by the user.

3. System according to one of Claims 1 or 2, **characterized in that** the telephone apparatus (10) is able to transmit the message selected in voice form by taking the handset (15) off-hook.

4. System according to any one of Claims 1 to 3, **characterized in that** the said list of electronic messages is accompanied by the number of words and/or by the duration of each message.

5. System according to any one of Claims 1 to 4, **characterized in that** the said electronic memory card (40) also comprises prepaid telephone units.

6. System according to any one of Claims 1 to 5, **characterized in that** the said data identifying the user comprise an electronic mail address (a).

7. System according to Claim 6, **characterized in that** the identifying data also comprise a password.

8. System according to any one of Claims 1 to 7, **characterized in that** the telephone apparatus (10) also comprises means of actions by the user on the message selected.

9. System according to Claim 8, **characterized in that** the said means of actions are means of response and/or of transmission of the said message.

10. System according to any one of Claims 1 to 9, **characterized in that** the telephone apparatus (10) is able to send a message composed orally by the user.
